(19)

Europäisches Patentamt
European Patent Office
Office européen des brevets

(11) **EP 4 346 160 A1**

(12) **EUROPEAN PATENT APPLICATION**

(43) Date of publication:
**03.04.2024   Bulletin 2024/14**

(21) Application number: **23199631.5**

(22) Date of filing: **26.09.2023**

(51) International Patent Classification (IPC):
**H04L 9/00** *(2022.01)*

(52) Cooperative Patent Classification (CPC):
**H04L 9/0662**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **28.09.2022   KR 20220123484**
**13.02.2023   KR 20230018863**

(71) Applicant: **Samsung Electronics Co., Ltd.**
**Suwon-si, Gyeonggi-do 16677 (KR)**

(72) Inventor: **PARK, Jongyeon**
**16677 Suwon-si (KR)**

(74) Representative: **Marks & Clerk LLP**
**15 Fetter Lane**
**London EC4A 1BW (GB)**

(54) **ELECTRONIC DEVICE AND METHOD FOR PERFORMING A SHUFFLING OPERATION**

(57)     Provided is an apparatus for performing a shuffling operation, the apparatus including a memory, and a processor connected to the memory, the processor configured to determine a maximum number of bits on the basis of a total number of operations to be shuffled, determine a shuffling set including a plurality of operations arranged in an execution order, generate, via a random number generator, binary random numbers, determine a shuffle position on the basis of a value obtained by shifting a binary number obtained by multiplying the binary random numbers by the number of operations included in the shuffling set right by the maximum number of bits, and perform a shuffling operation between a last operation and an operation in the shuffle position respectively included in the shuffling operation.

FIG. 3

EP 4 346 160 A1

**Description**

BACKGROUND

According to the standardization of a post-quantum cryptography (PQC) algorithm, a hiding response technique for enhancing security by changing an order of operations executed in an electronic device has been spotlighted. The basic algorithm of the hiding response technique is to quickly generate a uniform permutation (e.g. generate a permutation of items with a uniform distribution). Various algorithms (e.g., Fisher-Yates Shuffling) can be used for fast and safe permutations. However, the related art requires high implementation costs. Also, in order to enhance security, operation speed is slow and in order to enhance the operation speed, security is weakened.

SUMMARY

The inventive concepts relate to an electronic device, and more particularly, to a method for shuffling an operation by using the electronic device.
The inventive concepts provide a method for shuffling an operation execution order by using an electronic device.
According to some example embodiments, there is provided an apparatus for performing a shuffling operation, the apparatus including a memory and a processor connected to the memory, the processor configured to determine a maximum number of bits on the basis of (e.g. based on) a total number of operations to be shuffled, determine a shuffling set including a plurality of operations arranged in an execution order, generate, via a random number generator, binary random numbers on the basis of (e.g. based on) the maximum number of bits, determine a shuffle position on the basis of (e.g. based on) a value obtained by shifting a binary number obtained by multiplying the binary random numbers by the number of operations included in the shuffling set right by the maximum number of bits, and perform a shuffling operation between a last operation and an operation in the shuffle position respectively included in the shuffling operation.
According to some example embodiments, there is provided a method of performing a shuffling operation between a plurality of operations, the method including determining a maximum number of bits of binary random numbers on the basis of (e.g. based on) a total number of operations to be shuffled, determining a shuffling set including a plurality of operations arranged in an execution order, generating the binary random numbers on the basis of (e.g. based on) the maximum number of bits by using a random number generator, determining a shuffle position on the basis of (e.g. based on) a value obtained by shifting a binary number obtained by multiplying the binary random number by the number of operations included in the shuffling set right by the maximum number of bits, and performing a shuffling operation between a last operation and an operation in the shuffle position respectively included in the shuffling operation.
According to some example embodiments, there is provided an apparatus for performing a shuffling operation, the apparatus including a memory, and a processor connected to the memory, the processor configured to select one among first through third shuffling modes, determine a maximum number of bits on the basis of (e.g. based on) the selected shuffling mode, and to determine a shuffle position, on the basis of (e.g. based on) the maximum number of bits, to perform a shuffling operation. The apparatus may also generate, via a random number generator, one or more binary random numbers.
At least some of the above and other features of the invention are set out in the claims.

BRIEF DESCRIPTION OF THE DRAWINGS

Some example embodiments will be more clearly understood from the following detailed description taken in conjunction with the accompanying drawings in which:

FIG. 1 is a block diagram schematically illustrating a system including an apparatus according to some example embodiments;
FIG. 2 is a detailed block diagram of a security module according to some example embodiments;
FIG. 3 is a flowchart illustrating an operation of determining an order of operations by using a security module, according to some example embodiments;
FIG. 4 is a detailed block diagram of a bit length determination circuit according to some example embodiments;
FIG. 5 is a flowchart illustrating an operation of determining a bit length by using a bit length determination circuit, according to some example embodiments;
FIG. 6 illustrates a method for shuffling an operation, according to some example embodiments;
FIG. 7 is a flowchart for describing an operation when an operation is executed in a set order without shuffling the operation;
FIG. 8 is a flowchart for describing a method for shuffling an operation by using a shift, according to some example embodiments;

FIG. 9 is a flowchart illustrating a bit length determination operation according to an operation mode of an application processor according to some example embodiments;

FIG. 10 is a view for describing an operation when an apparatus according to some example embodiments includes a plurality of application processors; and

FIG. 11 is a flowchart illustrating an operation of determining a bit length based on a performance difference of a plurality of application processors by using an apparatus according to some example embodiments.

DETAILED DESCRIPTION

Hereinafter, some example embodiments of the inventive concepts will be described in detail with reference to the accompanying drawings in order to enable a person skilled in the art to easily implement the inventive concepts.

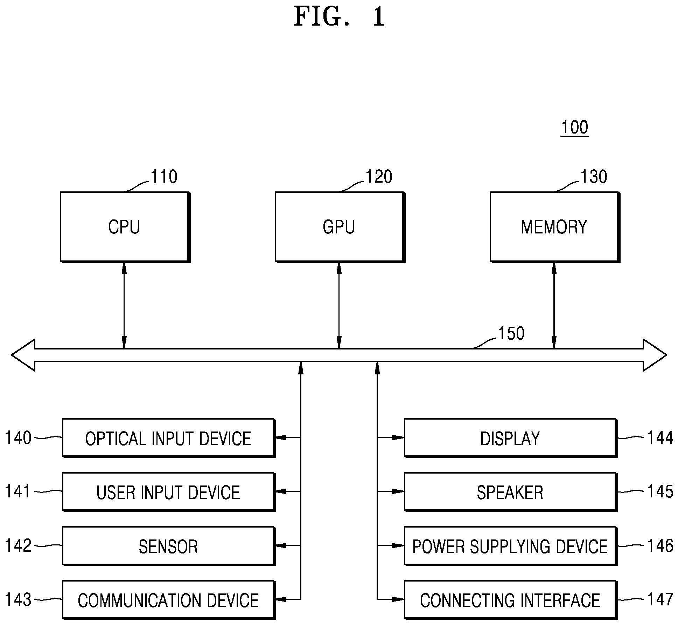

FIG. 1 is a block diagram schematically illustrating a system including an apparatus according to some example embodiments.

FIG. 1 is a view illustrating a system 100 according to some example embodiments. The system 100 of FIG. 1 may be a mobile system such as a mobile phone, a smartphone, a tablet personal computer (PC), a wearable device, a health care device, and/or an Internet of Things (IoT) device. However, the system 100 of FIG. 1 is not necessarily limited to a mobile system and may be a PC, a laptop computer, a server, a media player, and/or an automotive device such as a navigation device.

Referring to FIG. 1, the system 100 may include a main processor 110, a graphics processing unit (GPU) 120, and/or a memory 130 and may further include at least one of an image capturing device 140, a user input device 141, a sensor 142, a communication device 143, a display 144, a speaker 145, a power supplying device 146, and/or a connecting interface 147. The main processor 110, the GPU 120, the memory 130, the image capturing device 140, the user input device 141, the sensor 142, the communication device 143, the display 144, the speaker 145, the power supplying device 146, and/or the connecting interface 147 may transmit/receive data to/from each other via a bus 150.

The main processor 110 may control the overall operation of the system 100, more specifically, operations of other elements that constitute the system 100. The main processor 110 may be implemented as a general-purpose processor, a dedicated processor, an application processor, and/or the like.

The main processor 110 may include at least one single core or multi-cores and may further include a controller for controlling the GPU 120 and/or the memory 130. In some example embodiments, some elements, for example, the main processor 110, the GPU 120, and/or the memory 130, may be implemented with a System on Chip (SoC), and the SoC may be an application processor, for example.

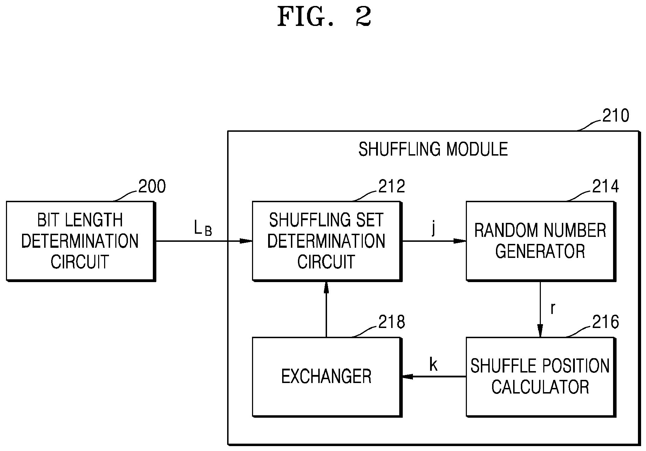

The main processor 110 may include a security module including a bit length determination circuit (200 of FIG. 2) and a shuffling set determination circuit (210 of FIG. 2). The security module may change the operation order of operations (e.g. may change the order of operations), or may enhance security by using various algorithms (e.g., a Fisher-Yates Shuffling technique). The security module may include a random number generator for generating random numbers within a set range. The security module may change an order of a plurality of operations by using random numbers generated by a random number generator, thereby providing an environment in which data may be efficiently and safely processed.

The GPU 120 may perform operations and generate two-dimensional and/or three-dimensional graphics. The GPU 120 may be specialized for processing graphics data to process graphics data in parallel.

The memory 130 may be used as a main memory device of the system 100, may include a nonvolatile memory such as static random access memory (SRAM) and/or dynamic RAM (DRAM) etc. but may also include a nonvolatile memory such as flash memory, phase-change RAM (PRAM) and/or resistive RAM (RRAM) etc. The memory 130 may also be implemented within the same package as the main processor 110.

The image capturing device 140 may capture a still image and/or moving image and may be a camera, a camcorder, and/or a webcam, etc.

The user input device 141 may receive various types of data input by a user of the system 100 and may be a touch pad, a key pad, a keyboard, a mouse, and/or a microphone, etc.

The sensor 142 may sense various types of physical quantities that may be obtained from the outside of the system 100 and may convert the sensed physical quantities into an electrical signal. The sensor 142 may be a temperature sensor, a pressure sensor, an illuminance sensor, a position sensor, an acceleration sensor, a biosensor, and/or a gyroscope.

The communication device 143 may transmit and receive signals to and from other devices outside the system 100 according to various communication protocols. The communication device 143 may include an antenna, a transceiver, and/or a modem, etc.

The display 144 and/or the speaker 145 may function as an output device for outputting visual information and auditory information, respectively, to the user of the system 100.

The power supplying device 146 may properly convert power supplied from a battery (not shown) embedded in the system 100 and/or an external power supply and may supply the power to each of elements of the system 100.

The connection interface 147 may provide connection between the system 100 and an external device connected to the system 100 to exchange data with the system 100. The connection interface 147 may be implemented as various interface such as an Advanced Technology Attachment (ATA) interface, a Serial ATA (SATA) interface, an external SATA (e-SATA) interface, a Small Computer Small Interface (SCSI) interface, a Serial Attached SCSI (SAS) interface, a Peripheral Component Interconnection (PCI) interface, a PCI express (PCIe) interface, an NVM express (NVMe) interface, an IEEE 1394 interface, a universal serial bus (USB) interface, a secure digital (SD) card interface, a multi-media card (MMC) interface, an embedded multi-media card (eMMC) interface, a Universal Flash Storage (UFS) interface, an embedded Universal Flash Storage (eUFS) interface, a compact flash (CF) card interface, etc.

FIG. 2 is a detailed block diagram of a security module according to some example embodiments.

The security module may be implemented by, for example, the main processor 110. The security module may change an order in which a plurality of operations are executed. The plurality of operations may have an arbitrarily-set initial operation execution order. For example, the initial operation execution order in which a second operation is executed after a first operation and a third operation is executed after the second operation through a certain method may be determined. Subsequently, the security module may perform a shuffling operation and may change an order in which each operation is executed. Hereinafter, the position of each operation in an arrangement in which the plurality of operations are arranged in the order in which the plurality of operations are executed corresponds to the order in which each operation is executed.

Referring to FIG. 2, the security module may include a bit length determination circuit 200 and a shuffling module 210. The shuffling module 210 may include a shuffling set determination circuit 212, a random number generator (RNG) 214, a shuffle position calculator 216, and/or an exchanger 218.

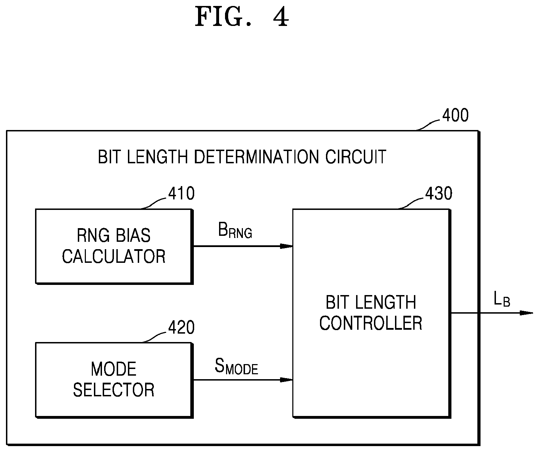

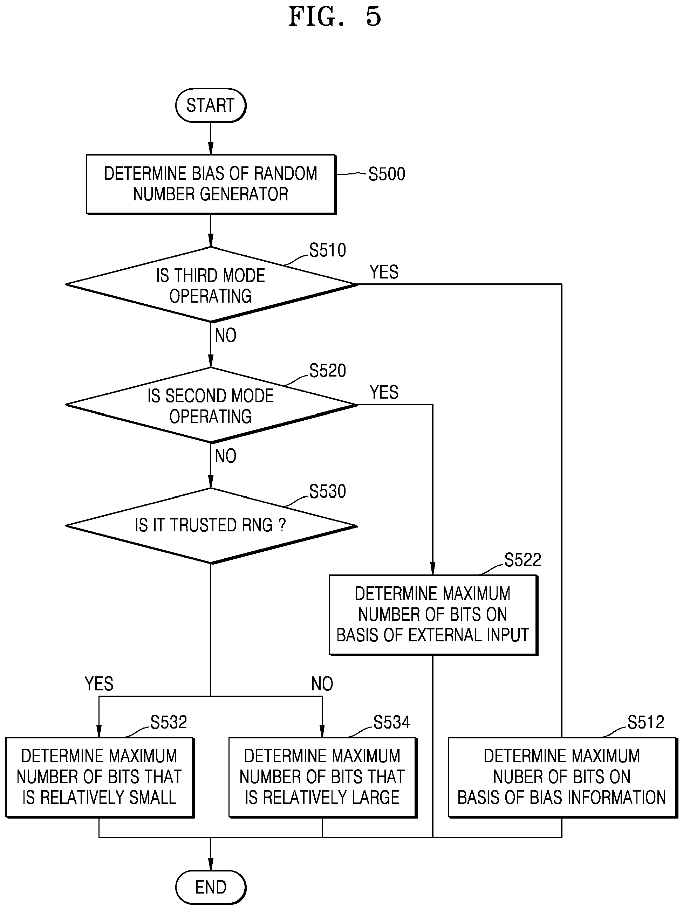

The bit length determination circuit 200 may determine the maximum number of bits of random numbers generated for an operation shuffling operation. According to some example embodiments, the bit length determination circuit 200 may determine the maximum number of bits on the basis of (e.g. based on) the total number of operations to be shuffled. For example, the bit length determination circuit 200 may determine the number of bits used when the total number of operations is expressed as binary notation, as the maximum number of bits. An offset may be added to this value to vary the size of the maximum number of bits based on various factors, such as a bias of the random number generator 214, an operation mode of the processor performing the shuffling (e.g. that implements the shuffling module 210), or performance level or speed of the processor. According to some example embodiments, the bit length determination circuit 200 may determine more bits than the number of bits used when the total number of operations is expressed as binary notation, as the maximum number of bits. According to some example embodiments, the bit length determination circuit 200 may determine the maximum number of bits of random numbers on the basis of (e.g. based on) a bias of the random number generator 214. For example, the bit length determination circuit 200 may determine the maximum number of bits to be relatively large when the bias of the random number generator 214 is greater than a set value and determine the maximum number of bits to be relatively small when the bias of the random number generator 214 is less than a set value. This may be achieved by adding a first offset to the maximum number of bits when the bias is greater than a set value, and not adding any offset, or adding a second offset that is smaller than the first offset, when the bias is less than or equal to the set value. A method of determining the maximum number of bits by using the bit length determination circuit 200 is described below in detail with reference to FIGS. 4 and 5.

The shuffling module 210 may perform a shuffling operation by using the maximum number of bits determined by using the bit length determination circuit 200. Operations respectively performed by the shuffling set determination circuit 212, the random number generator 214, the shuffle position calculator 216, and/or the exchanger 218 of the shuffling module 210 may form one loop, the loop may be repeated until a set condition is satisfied, and the operation order may be shuffled. The shuffling set determination circuit 212 may determine a set (hereinafter, a shuffling set) in which operations to be shuffled in a current loop are arranged in the operation order. According to some example embodiments, whenever the loop is repeated, the total number of operations included in the shuffling set of the current loop may be one less than the total number of operations included in the shuffling set of the previous loop. The shuffling set determination circuit 212 may transmit, to the random number generator 214, the number of operations included in the shuffling set in the current loop and the maximum number of bits received from the bit length determination circuit 200.

The random number generator 214 may generate random numbers on the basis of (e.g. based on) the maximum number of bits. For example, when the maximum number of bits is $L_B$, the random number generator 214 may generate a number r ($0 \leq r < 2^{L_B}$) that may be expressed as an $L_B$-bit number. The random number generator 214 may generate random numbers by using binary notation.

The shuffle position calculator 216 may determine two operations to be shuffled in each shuffling loop. Hereinafter, the position of the operation, which becomes the subject of the exchange in the current loop, is referred to as a target position, and the position of the operation to be exchanged in the current loop is referred to as a shuffle position. According to some example embodiments, the target position may be the position of the last operation of the shuffling set in the current loop. The target position is not limited thereto, and the positions of various operations may be determined as the target position. However, hereinafter, for convenience, the target position is the position of the last operation of the shuffling set. The shuffle position calculator 216 may determine a shuffle position by using a set equation.

Hereinafter, a procedure in which the shuffle position calculator 216 determines the shuffle position is described by using Equations 1 through 4. The shuffle position calculator 216 may obtain an $L_B$-bit binary number r generated by the random number generator 214. The range of the random number r is given as the following Equation 1.

【Equation 1】

$$0 \leq r < 2^{L_B}$$

When the number of operations included in a current shuffling set is referred to as j, a random integer between 0 and (j-1) may be obtained by dividing Equation 1 by $2^{L_B}$, multiplying the result of the division by j, and then using Gauss' notation.

【Equation 2】

$$0 \leq \frac{r}{2^{L_B}} < 1$$

$$0 \leq \frac{r \times j}{2^{L_B}} < j$$

$$0 \leq \left[\frac{r \times j}{2^{L_B}}\right] \leq j - 1$$

In the above equation, the notation [x] represents the largest integer not exceeding x (e.g. the floor function). Last, by adding 1 to Equation 2 as below, a random integer between 1 and j may be obtained.

【Equation 3】

$$1 \leq \left[\frac{r \times j}{2^{L_B}}\right] + 1 \leq j$$

Thus, a random integer K between 1 and j is given as the following Equation 4.

【Equation 4】

$$K = \left[\frac{j \times r}{2^{L_B}}\right] + 1$$

The shuffle position calculator 216 may calculate a shuffle position using Equation 4. The shuffle position may be calculated by using the number of operations included in the current shuffling set j, random number r, and the maximum number of bits $L_B$. The shuffle position calculator 216 may implement Equation 4 as the following Equation 5 by using a bit operator (e.g. a bitwise operator or bitwise operation).

【Equation 5】

$$K = \{(j \times r) \gg L_B\} + 1$$

K: shuffle position
j: the number of operations included in a shuffling set of a current loop
r: random number generated by a random number generator
$L_B$: the maximum number of bits
»: the right-shift operator

The shuffle position calculator 216 may calculate the shuffle position by shifting the result obtained by multiplying a binary number j by r to the right by an $L_B$-bit. By using the shift operation, only necessary, or sufficient, information may be obtained while the total bit length is maintained. For example, when the maximum number of bits $L_B$ is 4, a random number r generated by the random number generator 214 is $7(111_{(2)})$ and the number of operations j included in the shuffling set of the current loop is $13(1101_{(2)})$, the shuffle position K may be determined as $0000101_{(2)}+1$ (e.g. $6_{(10)}$) obtained by shifting $111_{(2)} \times 1101_{(2)} = 1011011_{(2)}$ to the right by 4 and adding 1 thereto, so that an operation in the thirteenth position (i.e. $j = 13$) and an operation in the sixth position (i.e. $K = 6$) may be determined as an object of a shuffling operation. Since, when the shuffle position is calculated by using Equation 5, the apparatus may be implemented by using only multiplication, shift, and addition operators, a previously high-cost apparatus may be implemented at low costs.

The exchanger 218 may obtain, from the shuffle position calculator 216, position information of two operations to be an object of the shuffling operation. The exchanger 218 may exchange the positions of two operations at that location in the current shuffling set. For example, when the first operation in the first position and the second operation in the second position are objects of the shuffling operation, the exchanger 218 may change the position so that the first operation may be in the second position and the second operation may be in the first position.

When operations of the shuffling set determination circuit 212, the random number generator 214, the shuffle position calculator 216, and the exchanger 218 are completed, one loop may be terminated. The shuffling set determination circuit 212 may check whether or not the number of operations included in the shuffling set of the terminated loop is 2. When the number of operations included in the shuffling set of the terminated loop is greater than 2, the shuffling set determination circuit 212 may determine the shuffling set including the other operations excluding the last operation of the shuffling set of the terminated loop as a shuffling set of a new loop. For example, when the number of operations included in the shuffling set of the current loop is N, the shuffling set of the next loop may be determined to include (N-1) operations excluding an operation in a N-th position. The shuffling set determination circuit 212 may shuffle an order in which operations are executed while repeating a loop. Each time a loop is completed, the operation occupying the target position (e.g. the last operation of the shuffling set of the previous loop) is removed from the shuffling set. Accordingly, as a number of loops are completed, the size of the shuffling set decreases. When the number of operations included in the shuffling set of the terminated loop is two, the shuffling set determination circuit 212 may determine that the shuffling operation is terminated.

Therefore, according to example embodiments, main processor 100 may perform a shuffling operation to increase security of the system 100 while maintaining an increased operating speed.

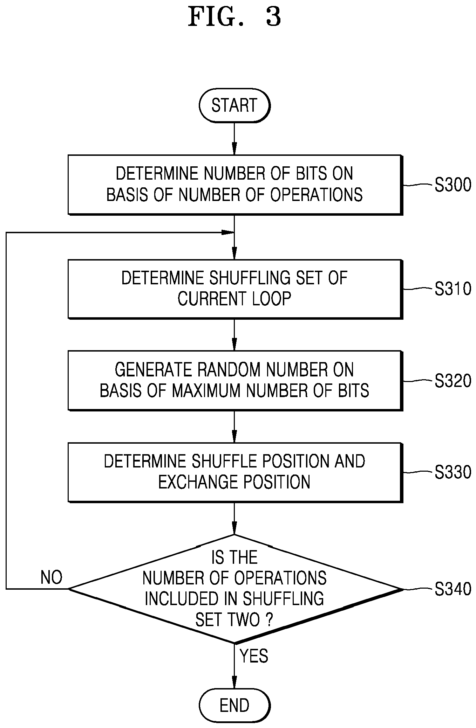

FIG. 3 is a flowchart illustrating an operation of determining an order of operations by using a security module, according to some example embodiments.

In operation S300, a bit length determination circuit may determine the maximum number of bits on the basis of (e.g. based on) the total number of operations to be shuffled. The maximum number of bits is for use in generating random numbers, and the maximum number of bits may be greater than or equal to the number of bits used when the total number of operations to be shuffled is expressed by using a binary method. For example, when the range of a total number j of operations to be shuffled is equal to the following Equation 6, the maximum number of bits may be determined as a value that is greater than or equal to $L_B$.

【Equation 6】

$$2^{L_B-1} \le j < 2^{L_B}$$

In operation S310, a shuffling set determination circuit may determine a shuffling set of a current loop. The shuffling set of a first loop may include all operations to be shuffled. As the loop is repeated, the shuffling set of the next loop may be the shuffling set of the immediately previous loop, excluding the last operation. That is, each time a loop is completed, the operation occupying the target position in the previous set (e.g. after the shuffling operation of the completed loop) is excluded from the next shuffling set (and from any later shuffling sets).

In operation S320, a random number generator may generate a random number on the basis of (e.g. based on) the maximum number of bits determined in operation S300. The random number generator may generate random numbers that may be expressed as the maximum number of bits. In addition, the number that is greater than or equal to the total number of operations to be shuffled may be expressed by using the maximum number of bits.

In operation S330, a shuffle position calculator may determine a shuffle position, and an exchanger may exchange positions of two operations to be an object of the shuffling operation. The shuffle position calculator may calculate the shuffle position by using Equation 5. The shuffle position calculator may calculate the shuffle position by using the maximum number of bits $L_B$, the number j of operations included in the shuffling set of the current loop, and the random number r. The shuffle position calculator may determine the operation of the determined shuffle position and the last operation of the shuffling set as objects of the shuffling operation. The exchanger may obtain, from the shuffle position calculator, position information of operations to operations of the shuffling operation and may exchange positions of two operations.

In operation S340, the shuffling set determination circuit may check whether or not the number of operations included in the shuffling set of the current loop is 2. When one loop is terminated, the shuffling set determination circuit may check whether or not the number of operations included in the shuffling set of the current loop is 2, before the next loop proceeds. When the number of operations included in the shuffling set is greater than 2, the shuffling set determination circuit may generate a new shuffling set excluding the last operation of the shuffling set of the current loop to perform the next loop. When the number of operations included in the shuffling set is 2, the shuffling set determination circuit may terminate the shuffling operation.

FIG. 4 is a detailed block diagram of a bit length determination circuit according to some example embodiments.

Referring to FIG. 4, a bit length determination circuit 400 may include a random number generator (RNG) bias calculator 410, a mode selector 420, and/or a bit length controller 430. The bit length determination circuit 400 may be implemented by, for example, the main processor 110. The RNG bias calculator 410 may calculate a bias of the random number generator. The random number generator may generate one of the numbers within a set range randomly, but due to design limitations, the probability that a specific number being generated may be higher than the other numbers. The probability that an ideal random number generator generates numbers within a set range is uniformly distributed. However, there may be a bias having a high probability that a specific number may be generated (that is, the random number generator may have some bias that results in a non-uniform probability distribution for the random numbers). The RNG bias calculator 410 may calculate a bias of the random number generator. For example, the RNG bias calculator 410 may accumulate the random numbers generated by the random number generator by a set number (e.g. my accumulate a predefined or set number of random numbers) to store them and may calculate the bias of the random number generator by using statistics (e.g. a distribution) of the accumulated numbers. The RNG bias calculator 410 may transmit information $B_{RNG}$ about the calculated bias to the bit length controller 430.

The bit length controller 430 may determine the maximum number of bits to be a larger value when the bias of the random number generator is high (and the maximum number of bits to be a smaller value when the bias of the random number generator is low) in order to correct bias. That is, there may be a direct relationship (e.g. a positive correlation) between the maximum number of bits and the bias of the random number generator. As the maximum number of bits is determined to be a large value, the bias of the random number generator may be corrected. When the probability that a specific number is to be generated by the random number generator increases, if the maximum number that the random number generator may generate increases, the difference between the probability that a remaining number is to be generated and the probability that a specific number is to be generated may be reduced. For example, when the maximum number of bits is 3 when the K value is calculated using Equation 4, the number of possible random numbers R is 8 integers from 0 to 7, and thus, if there is an integer having a high probability of generation among integers from 0 to 7, the influence on the calculation of a K value is large. On the other hand, when the maximum number of bits is 10, the generated random number r is 1024 integers from 0 to 1023, and thus, even if some of integers from 0 to 1023 have an increased probability of being generated, their influence on the calculation of the K value may be insignificant. Thus, if the maximum number of bits increases, the bias may not be completely, (or substantially), resolved but may be at least partially corrected. In addition, when the maximum number of bits is too high, the operation time of the security module may be increased due to an increased amount of calculations. Therefore, it is important to set the maximum number of bits to an appropriate value.

The mode selector 420 may determine a mode in which the bit length controller 430 determines the maximum number of bits. According to some example embodiments, the mode selector 420 may determine a shuffling mode on the basis of (e.g. based on) an external input received by using (e.g. via) a user interface. When the bit length controller 430 operates in a first shuffling mode, the bit length controller 430 may determine the maximum number of bits on the basis of (e.g. based on) a received type of the random number generator. When the bit length controller 430 operates in a second shuffling mode, the bit length controller 430 may determine the maximum number of bits on the basis of (e.g. based on) a received value. When the bit length controller 430 operates in a third shuffling mode, the bit length controller 430 may determine the maximum number of bits on the basis of (e.g. based on) a bias of the random number generator. The mode selector 420 may transmit, to the bit length controller 430, information $S_{MODE}$ indicating a shuffling mode of the bit length controller 430 on the basis of (e.g. based on) the external input.

According to some example embodiments, when the bit length controller 430 operates in a first mode, the bit length controller 430 may determine the maximum number of bits on the basis of (e.g. based on) the received type of the random number generator. That is, the maximum number of bits may be determined in the first mode based on an input that specifies a type (e.g. a trusted RNG or an untrusted RNG). According to some example embodiments, when the bit length controller 430 operates in the first mode, the bit length controller 430 may provide recommendations of the type of the random number generator on the basis of (e.g. based on) bias information $B_{RNG}$ obtained from the RNG bias calculator 410. These recommendations may be output (e.g. via the user interface) and a user, or other computing system, may select the type based on these recommendations, and provide the selected type as an input (e.g. via the user interface).

The bit length controller 430 may determine the random number generator as a trusted RNG or an untrusted RNG on the basis of (e.g. based on) the bias information of the random number generator (e.g. for the purposes of determining a recommendation in the first mode). The trusted RNG is a random number generator having lower bias than a set value (e.g. less than or equal to a threshold value), and the untrusted RNG may be a random number generator having higher bias than the set value (e.g. greater than the threshold value). Thus, the bit length controller 430 may determine the maximum number of bits to be greater in the case of the untrusted RNG compared to the case of the trusted RNG in order to correct the bias. When the bit length controller 430 determines the random number generator to be a trusted RNG, the bit length controller 430 may determine a value obtained by adding a first value (e.g. a first offset) (e.g., 5) to a bit length in which the number of operations to be shuffled may be expressed, as the maximum number of bits. When the bit length controller 430 determines the random number generator to be an untrusted RNG, the bit length controller 430 may determine a value obtained by adding a second value (e.g. a second offset) (e.g., 10) that is greater than the first value to the bit length in which the number of operations to be shuffled may be expressed, as the maximum number of bits.

When the bit length controller 430 operates in a second mode, the bit length controller 430 may determine the maximum number of bits on the basis of (e.g. based on) the external input. The bit length controller 430 may receive a value through the user interface and may determine the received value as the maximum number of bits. The second mode may be used when the user has professional knowledge of the maximum number of bits determined.

When the bit length controller 430 operates in a third mode, the bit length controller 430 may determine the maximum number of bits on the basis of (e.g. based on) the bias information $B_{RNG}$ without external input. When the bit length controller 430 operates in the third mode, the bit length controller 430 may obtain bias information and may determine the optimum (or desired) maximum number of bits in which bias may be corrected. For instance, the bias information may be used to determine an offset to be added to the maximum number of bits. The offset may be larger for larger bias values (e.g. there may be a direct relationship between bias and offset). The offset may also be reduced from the determined amount to reduce an amount of calculations. The reduction may be an amount such that the maximum number of bits does not exceed a threshold value.

According to some example embodiments, the bit length determination circuit 400 may determine the maximum number of bits on the basis of (e.g. based on) an operation mode of an application processor. For example, the application processor may operate in a first mode (security mode) for security enhancement and a second mode (high-speed mode) for fast work speed. The application processor may determine an operation mode as the first mode or the second mode according to the characteristics of work. When operating in the first mode, the application processor may increase the maximum number of bits to maximally correct the bias of the random number generator for security enhancement. When operating in the first mode, the operation speed may be lower than in the second mode. However, the effect of enhancing security by correcting the bias of the random number generator may be further increased. When operating in the second mode, the application processor may reduce resources required, or sufficient, for operations and may reduce the maximum number of bits so as to perform work at a higher speed. When operating in the second mode, the effect of correcting the bias of the random number generator is lower than in the first mode. However, shuffling an operation may be more quickly performed with relatively fewer resources.

According to some example embodiments, when an apparatus includes a plurality of application processors, the bit length determination circuit 400 may determine the maximum number of bits on the basis of (e.g. based on) the performance of the application processor that performs a shuffling operation. The apparatus may include, for example, a high-performance (or higher performance) first application processor and/or a low-performance (or lower performance) second application processor. The first (high-performance) application processor may operate at a higher performance (e.g. may be faster and/or may have more computing resources) than the second (low-performance) application processor. When a shuffling operation is performed with the first application processor, the first application processor may rapidly perform more operations, and thus the apparatus may set the maximum number of bits to a relatively large value. On the other hand, when the shuffling operation is performed with the second application processor, the apparatus may set the maximum number of bits to a relatively small value. It will be appreciated that the terms "high" and "low" are in this context relative terms, and do not imply any explicit values for performance (other than the first application processor having a higher performance than the second application processor).

FIG. 5 is a flowchart illustrating an operation of determining a bit length by using a bit length determination circuit, according to some example embodiments.

In operation S500, the RNG bias calculator may calculate a bias of the random number generator.

In operation S510, the mode selector may determine whether or not the third mode is operating. When the bit length controller operates in the third mode, in operation S512, the bit length controller may determine the maximum number of bits on the basis of (e.g. based on) the bias information $B_{RNG}$. For instance, the bias information $B_{RNG}$ may be used to determine an offset to be added to the maximum number of bits. The offset may be larger for larger bias values (e.g. there may be a direct relationship between bias and offset). The offset may also be reduced from the determined amount to reduce an amount of calculations. The reduction may be an amount such that the maximum number of bits does not exceed a threshold value.

In operation S520, the mode selector may determine whether or not the second mode is operating. When the bit length controller operates in the second mode, in operation S522, the bit length controller may determine the maximum number of bits on the basis of (e.g. based on) external input (e.g. a selection of the maximum number of bits received via the user interface).

In operation S530, the mode selector determines that the bit length controller operates in the first mode, and the bit length controller determines whether the random number generator is a trusted random number generator or an untrusted random number generator on the basis of (e.g. based on) an external input obtained by using the user interface. According to some example embodiments, the bit length controller may provide recommendations on the type of the random number generator on the basis of (e.g. based on) the bias information $B_{RNG}$. For instance, when the bias information $B_{RNG}$ indicates a bias less than or equal to a threshold value, the bit length controller may recommend that the random number generator be set as a trusted random number generator. Similarly, when the bias information $B_{RNG}$ indicates a bias greater than the threshold value, the bit length controller may recommend that the random number generator be set as an untrusted random number generator. The bit length controller may determine the type of the random number generator based on external input (e.g. a selection of a recommended type of the random number generator received via the user interface). When the random number generator is a trusted RNG, in operation S532, the bit length controller may determine the maximum number of bits to be relatively small. When the random number generator is an untrusted RNG, in operation S534, the bit length controller may determine the maximum number of bits to be relatively large.

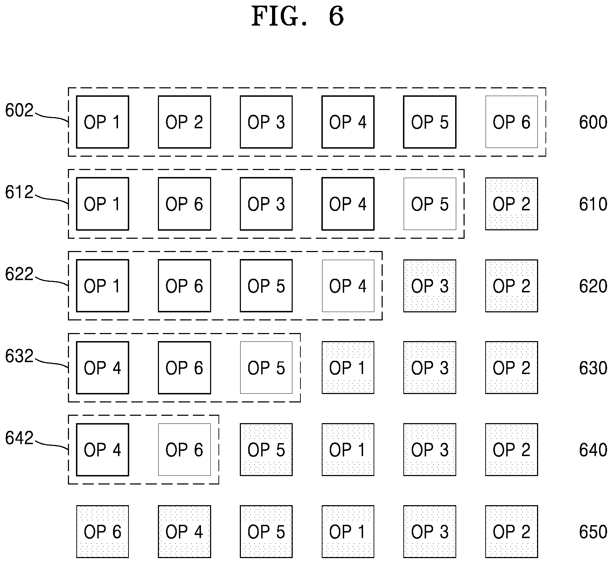

FIG. 6 illustrates a method for shuffling an operation, according to some example embodiments. The number of operations (OP1, OP2, OP3, OP4, OP5, OP6) and each loop (600, 610, 620, 630, 640, 650) shown in FIG. 6 are for describing some example embodiments of an operation shuffling method, and the inventive concepts are not limited to that shown in FIG. 6.

Referring to FIG. 6, the apparatus may shuffle operations including a first operation OP1, a second operation OP2, a third operation OP3, a fourth operation OP4, a fifth operation OP5, and/or a sixth operation OP6. The apparatus may determine that a shuffling set 602 of a first loop 600 includes all operations. An operation (e.g. a target operation) in a target position of the first loop 600 may be the sixth operation OP6, and the apparatus may determine a shuffle position as a second position by using Equation 5. The apparatus may exchange the position of the second operation OP2 in the second position and the position of the sixth operation OP6 and may terminate the first loop 600. After the termination of the first loop 600, the apparatus may execute the second operation OP2 in the sixth position.

In the second loop 610, the apparatus may determine that the shuffling set 612 includes all operations excluding the second operation OP2 in the sixth position from the previous shuffling set 602. An operation in a target position of the second loop 610 may be the fifth operation OP5, and the apparatus may determine a shuffle position as the third position by using Equation 5. The apparatus may exchange the position of the third operation OP3 in the third position and the position of the fifth operation OP5 and may terminate the second loop 610. After the termination of the second loop 610, the apparatus may execute the third operation OP3 in the fifth position.

In the third loop 620, the apparatus may determine that the shuffling set 622 includes all operations excluding the third operation OP3 in the fifth position from the previous shuffling set 612. An operation in a target position of the third loop 620 may be the fourth operation OP4, and the apparatus may determine a shuffle position as the first position by using Equation 5. The apparatus may exchange the position of the first operation OP1 in the first position and the position of the fourth operation OP4 and may terminate the third loop 620. After the termination of the third loop 620, the apparatus may execute the first operation OP1 in the fourth position.

In the fourth loop 630, the apparatus may determine that the shuffling set 632 includes all operations excluding the first operation OP1 in the fourth position from the previous shuffling set 622. An operation in a target position of the fourth loop 630 may be the fifth operation OP5, and the apparatus may determine a shuffle position as the third position by using Equation 5. Since the target position and the shuffle position are the same, the apparatus may terminate the fourth loop 630 without exchanging operation positions in the fourth loop 630. After the termination of the fourth loop 630, the apparatus may execute the fifth operation OP5 in the third position.

In the fifth loop 640, the apparatus may determine that the shuffling set 642 includes all operations excluding the fifth operation OP5 in the third position from the previous shuffling set 632. An operation in a target position of the fifth loop 640 may be the sixth operation OP6, and the apparatus may determine a shuffle position as the first position by using Equation 5. The apparatus may exchange the position of the fourth operation OP4 in the first position and the position of the sixth operation OP6 and may terminate the fifth loop 640. After the termination of the fifth loop 640, the apparatus may execute the fourth operation OP4 in the second position.

Since the number of operations included in the shuffling set of the fifth loop 640 is 2, the apparatus may complete the shuffling operation without performing the next loop after the fifth loop 640 is terminated. Last, the apparatus may execute the sixth operation OP6 in the first position.

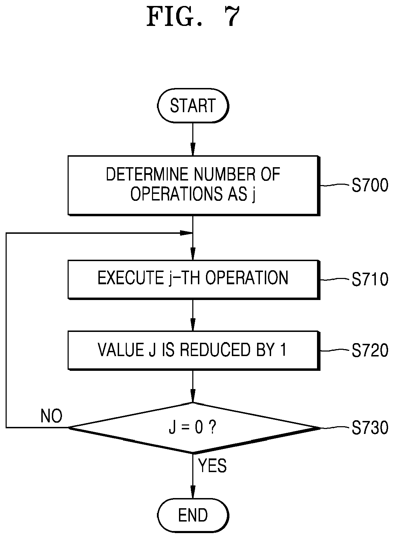

FIG. 7 is a flowchart for describing an operation when an operation is executed in a set order without shuffling the operation.

In operation S700, the apparatus may determine the number of operations as a value j. In operation S710, the apparatus may execute a j-th operation. In operation S720, the apparatus may reduce the value j by 1. In operation S730, the apparatus may check whether or not the value j is 0 or not. When a current value j is greater than 0, the apparatus may proceed back to operation S710 and may execute a j-th operation. When the current value j is 0, the apparatus may terminate the operation.

Referring to FIG. 7, the apparatus may execute operations in order from behind. Since operations executed in order may be vulnerable to security, there is a need for a method for shuffling an operation to enhance security.

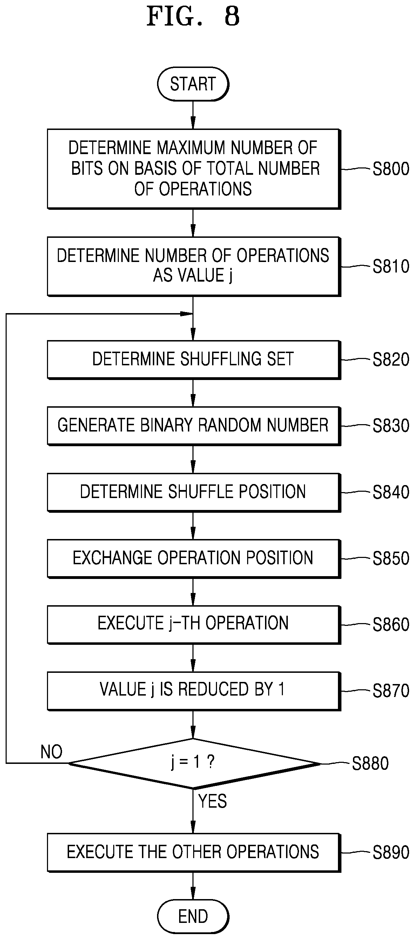

FIG. 8 is a flowchart for describing a method for shuffling an operation by using a shift, according to some example embodiments.

In operation S800, the apparatus may determine the maximum number of bits on the basis of (e.g. based on) the total number of operations to be shuffled. The maximum number of bits may be greater than or equal to a number of bits that may represent the total number of operations to be shuffled. For example, when ten operations are shuffled, the maximum number of bits may be 4 or more. According to some example embodiments, the maximum number of bits may be determined on the basis of (e.g. based on) a bias of the random number generator. When the maximum number of bits increases, the bias of the random number generator may be partially corrected. When the bias of the random number generator is large (e.g. greater than a threshold), the maximum number of bits may be determined as a relatively large number (e.g. through the addition of a first offset) and when the bias of the random number generator is small (e.g. less than or equal to a threshold), the maximum number of bits may be determined as a relatively small number (e.g. through the addition of no offset, or a second offset that is smaller than the first offset).

In operation S810, the apparatus may determine the total number of operations to be shuffled as a value j. The total number of operations to be shuffled is an initial value j, and the value j decreases as the loop proceeds.

In operation S820, the apparatus may determine a shuffling set of a current loop. The initial shuffling set may include all operations to be shuffled. As the loop proceeds, the number of operations included in the shuffling set may be reduced.

In operation S830, the apparatus may generate a binary random number by using the random number generator. The generated random number may be a number that may be expressed using the maximum number of bits. The binary random number may be selected from within a range expressed as in Equation 1. The random number generator may have a higher bias with an increased probability in which a certain number may be generated, but the bias may be partially corrected by increasing the maximum number of bits. Whilst S830 describes generating one binary random number, one or more binary random numbers may be generated.

In operation S840, the apparatus may determine a shuffle position. The apparatus may determine the shuffle position by using Equation 5. An operation in the shuffle position may be an operation to be an object of a shuffling operation in a current loop. Since the apparatus may be implemented by using only multiplication, shift, and addition operations, the apparatus may be implemented with low costs.

In operation S850, the apparatus may exchange positions of two operations to be objects of the shuffling operation. The apparatus may exchange the position of the operation in the shuffle position with the position of an operation in the target position. After the exchange of the operation, the current loop may be terminated. After the current loop is terminated, in operation S860, the apparatus may execute the j-th operation, and in operation S870, the apparatus may reduce the value j by 1.

In operation S880, the apparatus may check whether or not the value of j is 1 before the next loop proceeds. When the value j is not 1 (e.g. j is greater than 1), the apparatus may proceed back to operation S820 and may determine a shuffling set so as to proceed to the next loop. The apparatus may shuffle the positions of operations while repeating loops from operations S820 to S880. When the value j is 1 (e.g. is equal to 1), in operation S890, the apparatus may complete the shuffling operation and may execute the other operations. The other operations may be one or more operations in the first position.

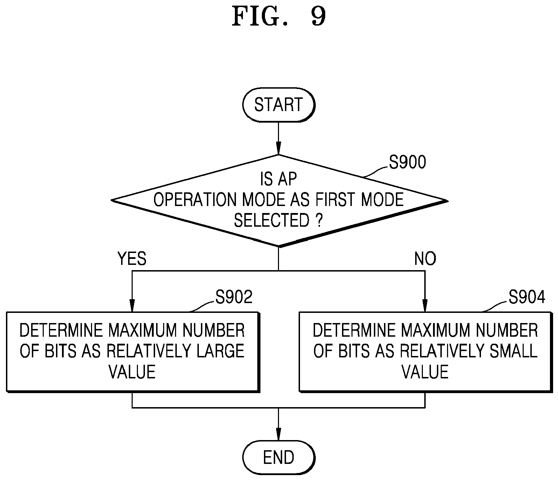

FIG. 9 is a flowchart illustrating a bit length determination operation according to an operation mode of an application processor according to some example embodiments.

In operation S900, the apparatus may determine an operation mode of the application processor. The application processor may operate in a first mode (a security mode) for security enhancement and/or a second mode (a high-speed mode) for fast work speed. In operation S902, when the application processor determines to operate in the first mode, the apparatus may determine the maximum number of bits as a relatively large value (e.g. a first value). This may be achieved by adding a first offset to the maximum number of bits. The first mode is an operation mode for enhancing security, and the apparatus may determine the maximum number of bits as a large value in order to correct the bias of the random number generator to the maximum. In operation S904, when the application processor determines to operate in the second mode, the apparatus may determine the maximum number of bits as a relatively small value (e.g. a second value smaller than the first value). This may be achieved by adding no offset (or a second offset that is less than the first offset) to the maximum number of bits. The second mode is an operation mode for efficient operations, and the apparatus may determine the maximum number of bits as a small value for a fast operation speed.

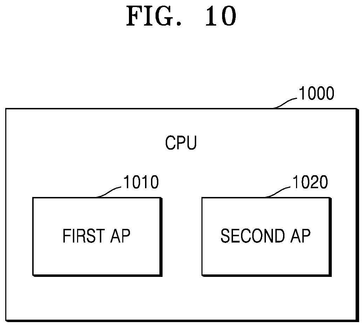

FIG. 10 is a view for describing an operation when an apparatus according to some example embodiments includes a plurality of application processors.

FIG. 10 illustrates that a central processing unit (CPU) 1000 includes only two application processors. However, example embodiments of the inventive concepts are not limited to the illustration of FIG. 10. Referring to FIG. 10, the apparatus may include a plurality of application processors. A difference in performance may exist in the plurality of application processors. For example, the CPU 1000 of the apparatus may include a high-performance first application processor 1010 and a low-performance second application processor 1020. The apparatus may determine the maximum number of bits on the basis of (e.g. based on) the performance of the application processor used for the shuffling operation. For example, when the high-performance first application processor 1010 is used, more operations may be quickly executed and a larger maximum number of bits may be used for security enhancement. When the low-performance second application processor 1020 is used, the maximum number of bits that is relatively small may be used.

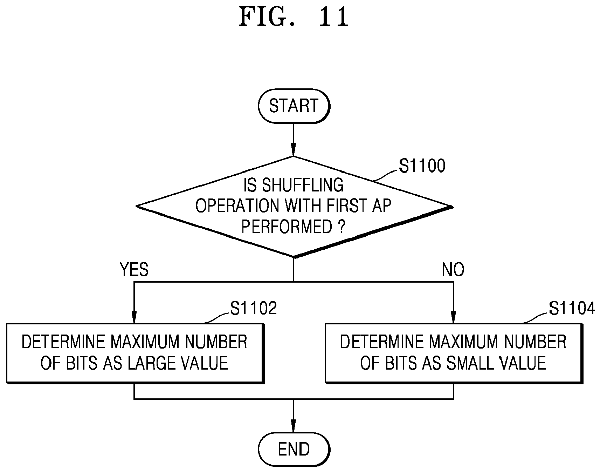

FIG. 11 is a flowchart illustrating an operation of determining a bit length based on a performance difference of a plurality of application processors by using an apparatus according to some example embodiments.

In operation S1100, the apparatus may determine an application processor for performing a shuffling operation among the plurality of application processors. When the shuffling operation is performed with the high-performance first application processor, in operation S1102, the apparatus may determine the maximum number of bits as a large value (e.g. a first value). This may be achieved by adding a first offset to the maximum number of bits. When the shuffling operation is performed with the low-performance first application processor, in operation S1104, the apparatus may determine the maximum number of bits as a small value (e.g. a second value smaller than the first value). This may be achieved by adding no offset (or a second offset that is less than the first offset) to the maximum number of bits.

One or more of the elements disclosed above may include or be implemented in one or more processing circuitries such as hardware including logic circuits; a hardware/software combination such as a processor executing software; or a combination thereof. For example, the processing circuitries more specifically may include, but is not limited to, a central processing unit (CPU) , an arithmetic logic unit (ALU), a digital signal processor, a microcomputer, a field programmable gate array (FPGA), a System-on-Chip (SoC), a programmable logic unit, a microprocessor, application-specific integrated circuit (ASIC), etc.

While the inventive concepts have been particularly shown and described with reference to some example embodiments thereof, it will be understood that various changes in form and details may be made therein without departing from the scope of the following claims.

**Claims**

1. An apparatus for performing a shuffling operation, the apparatus comprising:

   a memory; and
   a processor connected to the memory, the processor configured to

   determine a maximum number of bits on a basis of a total number of operations to be shuffled,
   determine a shuffling set including a plurality of operations arranged in an execution order,
   generate, via a random number generator, a binary random number on a basis of the maximum number of bits,

determine a shuffle position on a basis of a value obtained by shifting binary numbers obtained by multiplying the binary random number by a number of operations included in the shuffling set right by the maximum number of bits, and

perform a shuffling operation between a last operation and an operation in the shuffle position respectively included in the shuffling set.

2. The apparatus of claim 1, wherein the processor is further configured to

exchange orders of a last operation included in the shuffling set and an operation in the shuffle position, and terminate the shuffling operation in response to a number of operations included in the shuffling set being greater than or equal to a reference number.

3. The apparatus of claim 2, wherein the processor is further configured to

exclude the shuffled last operation from the shuffling set, and prepare a next shuffling operation in response to the number of operations included in the shuffling set exceeding the reference number.

4. The apparatus of any preceding claim, wherein the processor is further configured to

calculate a bias of the random number generator, determine the random number generator as a first type in response to the calculated bias of the random number generator exceeding a threshold value, determine the random number generator as a second type in response to the calculated bias of the random number generator being less than or equal to the threshold value, and determine the maximum number of bits on a basis of the determined type.

5. The apparatus of any preceding claim, wherein the processor is further configured to

calculate a bias of the random number generator, and determine the maximum number of bits on a basis of the calculated bias.

6. The apparatus of any preceding claim, wherein the processor is further configured to

determine the maximum number of bits as a first value in response to an operation mode being a first mode for a high-speed operation, and determine the maximum number of bits as a second value in response to the operation mode being a second mode for security enhancement, the second value being greater than the first value.

7. The apparatus of any preceding claim, wherein the processor comprises a plurality of application processors, APs, each AP of the plurality of APs being configured to perform the shuffling operation on a basis of a different respective maximum number of bits.

8. The apparatus of claim 7, wherein the plurality of APs comprise a first AP having high performance and a second AP having low performance, and
wherein the processor is configured to determine a maximum number of bits for the shuffling operation of the first AP such that the maximum number of bits for the shuffling operation of the first AP is greater than a maximum number of bits for the shuffling operation of the second AP.

9. The apparatus of any preceding claim, wherein the processor is further configured to determine a minimum value of the maximum number of bits to be an exponent value of an integer of a power of two closest to the total number of operations included in the shuffling set.

10. A method of performing a shuffling operation between a plurality of operations, the method comprising:

determining a maximum number of bits of binary random number on a basis of a total number of operations to be shuffled,
determining a shuffling set including a plurality of operations arranged in an execution order,

generating the binary random number on a basis of the maximum number of bits by using a random number generator,

determining a shuffle position on a basis of a value obtained by shifting binary numbers obtained by multiplying the binary random number by a number of operations included in the shuffling set right by the maximum number of bits, and

performing a shuffling operation between a last operation and an operation in the shuffle position respectively included in the shuffling set.

11. The method of claim 10, wherein the performing the shuffling operation comprises:

exchanging orders of a last operation included in the shuffling set and an operation in the shuffle position and terminating the shuffling operation in response to a number of operations included in the shuffling set being greater than or equal to a reference number.

12. The method of claim 11, further comprising:

generating of a new shuffling set by excluding a shuffled last operation from the shuffling set; and
preparing a next shuffling operation in response to the number of operations included in the shuffling set exceeding the reference number.

13. The method of claim 10 or claim 11, wherein the determining of the maximum number of bits comprises:

calculating a bias of the random number generator;
determining the random number generator as a first type in response to the calculated bias of the random number generator exceeding a threshold value;
determining the random number generator as a second type in response to the calculated bias of the random number generator being less than or equal to the threshold value; and
determining the maximum number of bits on a basis of the determined type.

14. The method of any of claims 10-13, wherein the determining of the maximum number of bits comprises:

determining the maximum number of bits as a first value in response to an operation mode being selected as a first mode for a high-speed operation; and
determining the maximum number of bits as a second value in response to the operation mode being selected as a second mode for security enhancement, the second value being greater than the first value.

15. The method of any one of claims 10 - 14, wherein the performing the shuffling operation includes performing the shuffling operation on a basis of a different maximum number of bits, each maximum number of bits corresponding, respectively, to an application processor (AP) of a plurality of application processors.

# FIG. 1

100

| | | |
|---|---|---|
| CPU — 110 | GPU — 120 | MEMORY — 130 |

— 150

| 140 — OPTICAL INPUT DEVICE | DISPLAY — 144 |
|---|---|
| 141 — USER INPUT DEVICE | SPEAKER — 145 |
| 142 — SENSOR | POWER SUPPLYING DEVICE — 146 |
| 143 — COMMUNICATION DEVICE | CONNECTING INTERFACE — 147 |

# FIG. 2

```
                                                          ┌─ 210
  ┌──────────────────────────────────────────────────────────────┐
  │                      SHUFFLING MODULE                         │
  │                                                               │
  │         ┌─ 212                        ┌─ 214                   │
  │    ┌──────────────┐             ┌──────────────┐              │
  │    │ SHUFFLING SET │     j      │RANDOM NUMBER │              │
  │    │ DETERMINATION │ ────────▶  │  GENERATOR   │              │
  │    │   CIRCUIT     │             └──────────────┘              │
  │    └──────────────┘                    │                      │
  │         ▲                              │ r                     │
  │         │              ┌─ 218          ▼      ┌─ 216           │
  │    ┌──────────────┐    k      ┌──────────────┐              │
  │    │  EXCHANGER   │ ◀──────── │SHUFFLE POSITION│             │
  │    │              │           │  CALCULATOR   │              │
  │    └──────────────┘           └──────────────┘              │
  └──────────────────────────────────────────────────────────────┘
```

┌─ 200
┌──────────────┐
│ BIT LENGTH   │   $L_B$
│ DETERMINATION│ ──────▶
│   CIRCUIT    │
└──────────────┘

15

# FIG. 3

START

DETERMINE NUMBER OF BITS ON BASIS OF NUMBER OF OPERATIONS — S300

DETERMINE SHUFFLING SET OF CURRENT LOOP — S310

GENERATE RANDOM NUMBER ON BASIS OF MAXIMUM NUMBER OF BITS — S320

DETERMINE SHUFFLE POSITION AND EXCHANGE POSITION — S330

IS THE NUMBER OF OPERATIONS INCLUDED IN SHUFFLING SET TWO ? — S340

NO

YES

END

16

# FIG. 4

BIT LENGTH DETERMINATION CIRCUIT — 400

RNG BIAS CALCULATOR — 410

$B_{RNG}$

MODE SELECTOR — 420

$S_{MODE}$

BIT LENGTH CONTROLLER — 430

$L_B$

# FIG. 5

```
                        ( START )
                            │
                            ▼
        ┌─────────────────────────────────┐
        │  DETERMINE BIAS OF RANDOM        │── S500
        │  NUMBER GENERATOR                │
        └─────────────────────────────────┘
                            │
                            ▼
                    ╱───────────────╲                S510
                  ╱   IS THIRD MODE    ╲──────── YES ──────┐
                  ╲    OPERATING       ╱                   │
                    ╲───────────────╱                      │
                            │ NO                           │
                            ▼                              │
                    ╱───────────────╲        S520          │
                  ╱   IS SECOND MODE   ╲───── YES ──┐       │
                  ╲    OPERATING       ╱            │       │
                    ╲───────────────╱              │       │
                            │ NO                    │       │
                            ▼             S530       │       │
                    ╱───────────────╲               │       │
                  ╱  IS IT TRUSTED RNG ? ╲           │       │
                  ╲                    ╱             │       │
                    ╲───────────────╱               │       │
                    YES         NO                   ▼       │
                     │           │         ┌──────────────────┐
                     │           │         │ DETERMINE MAXIMUM│── S522
                     │           │         │ NUMBER OF BITS ON│
                     │           │         │ BASIS OF         │
                     │           │         │ EXTERNAL INPUT   │
                     │           │         └──────────────────┘
          S532       │    S534   │                            S512
    ┌──────────────┐ │  ┌──────────────┐    ┌──────────────────┐
    │ DETERMINE    │ │  │ DETERMINE    │    │ DETERMINE MAXIMUM│
    │ MAXIMUM      │ │  │ MAXIMUM      │    │ NUBER OF BITS ON │
    │ NUMBER OF    │ │  │ NUMBER OF    │    │ BASIS OF BIAS    │
    │ BITS THAT IS │ │  │ BITS THAT IS │    │ INFORMATION      │
    │ RELATIVELY   │ │  │ RELATIVELY   │    └──────────────────┘
    │ SMALL        │ │  │ LARGE        │
    └──────────────┘ │  └──────────────┘
                     │
                     ▼
                  ( END )
```

# FIG. 6

| 602 | OP 1 | OP 2 | OP 3 | OP 4 | OP 5 | OP 6 | 600 |

| 612 | OP 1 | OP 6 | OP 3 | OP 4 | OP 5 | OP 2 | 610 |

| 622 | OP 1 | OP 6 | OP 5 | OP 4 | OP 3 | OP 2 | 620 |

| 632 | OP 4 | OP 6 | OP 5 | OP 1 | OP 3 | OP 2 | 630 |

| 642 | OP 4 | OP 6 | OP 5 | OP 1 | OP 3 | OP 2 | 640 |

| | OP 6 | OP 4 | OP 5 | OP 1 | OP 3 | OP 2 | 650 |

# FIG. 7

```
        ( START )
            │
            ▼
┌───────────────────────────┐
│  DETERMINE NUMBER OF      │──── S700
│  OPERATIONS AS j          │
└───────────────────────────┘
            │
            ▼
┌───────────────────────────┐
│  EXECUTE j-TH OPERATION   │──── S710
└───────────────────────────┘
            │
            ▼
┌───────────────────────────┐
│  VALUE J IS REDUCED BY 1  │──── S720
└───────────────────────────┘
            │
            ▼
NO      ◇ J = 0 ? ◇──── S730
            │
           YES
            │
            ▼
        ( END )
```

# FIG. 8

START

DETERMINE MAXIMUM NUMBER OF BITS ON BASIS OF TOTAL NUMBER OF OPERATIONS —S800

DETERMINE NUMBER OF OPERATIONS AS VALUE j —S810

DETERMINE SHUFFLING SET —S820

GENERATE BINARY RANDOM NUMBER —S830

DETERMINE SHUFFLE POSITION —S840

EXCHANGE OPERATION POSITION —S850

EXECUTE j-TH OPERATION —S860

VALUE j IS REDUCED BY 1 —S870

NO  $j = 1 ?$ —S880

YES

EXECUTE THE OTHER OPERATIONS —S890

END

# FIG. 9

START

IS AP OPERATION MODE AS FIRST MODE SELECTED ? — S900

YES           NO

DETERMINE MAXIMUM NUMBER OF BITS AS RELATIVELY LARGE VALUE — S902

DETERMINE MAXIMUM NUMBER OF BITS AS RELATIVELY SMALL VALUE — S904

END

# FIG. 10

CPU 1000

FIRST AP 1010

SECOND AP 1020

# FIG. 11

START

IS SHUFFLING OPERATION WITH FIRST AP PERFORMED ? — S1100

YES | NO

DETERMINE MAXIMUM NUMBER OF BITS AS LARGE VALUE — S1102

DETERMINE MAXIMUM NUMBER OF BITS AS SMALL VALUE — S1104

END

Europäisches
Patentamt
European
Patent Office
Office européen
des brevets

# EUROPEAN SEARCH REPORT

Application Number

EP 23 19 9631

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | US 2022/006611 A1 (GHOSH SANTOSH [US] ET AL) 6 January 2022 (2022-01-06) * paragraphs [0020] - [0034] * | 1-15 | INV. H04L9/00 |
| Y | O'neill M. E.: "Efficiently Generating a Number in a Range", , 22 July 2018 (2018-07-22), XP093130611, Retrieved from the Internet: URL:https://www.pcg-random.org/posts/bounded-rands.html [retrieved on 2024-02-13] * page 1 - page 3 * | 1-15 | |
| A | Anonymous: "Fisher-Yates shuffle", , 14 April 2022 (2022-04-14), XP093130798, Retrieved from the Internet: URL:https://en.wikipedia.org/w/index.php?title=Fisher%E2%80%93Yates_shuffle&oldid=1082693296 [retrieved on 2024-02-13] * the whole document * | 1-15 | |

TECHNICAL FIELDS
SEARCHED     (IPC)

H04L

The present search report has been drawn up for all claims

| Place of search | Date of completion of the search | Examiner |
|---|---|---|
| Munich | 13 February 2024 | Winkelbauer, Andreas |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
.........................................................
& : member of the same patent family, corresponding document

EPO FORM 1503 03.82 (P04C01)

EP 4 346 160 A1

## ANNEX TO THE EUROPEAN SEARCH REPORT
## ON EUROPEAN PATENT APPLICATION NO.

EP 23 19 9631

This annex lists the patent family members relating to the patent documents cited in the above-mentioned European search report.
The members are as contained in the European Patent Office EDP file on
The European Patent Office is in no way liable for these particulars which are merely given for the purpose of information.

13-02-2024

| Patent document cited in search report | | Publication date | Patent family member(s) | | Publication date |
|---|---|---|---|---|---|
| US 2022006611 | A1 | 06-01-2022 | CN | 115840935 A | 24-03-2023 |
| | | | EP | 4152685 A1 | 22-03-2023 |
| | | | JP | 2023046251 A | 03-04-2023 |
| | | | US | 2022006611 A1 | 06-01-2022 |